(19) **Europäisches Patentamt / European Patent Office / Office européen des brevets**

(11) **EP 2 501 652 B1**

(12) ## EUROPÄISCHE PATENTSCHRIFT

(45) Veröffentlichungstag und Bekanntmachung des Hinweises auf die Patenterteilung:
**12.10.2016 Patentblatt 2016/41**

(21) Anmeldenummer: **10779552.8**

(22) Anmeldetag: **19.11.2010**

(51) Int Cl.:
**C01B 33/16** [(2006.01)]

(86) Internationale Anmeldenummer:
**PCT/EP2010/067821**

(87) Internationale Veröffentlichungsnummer:
**WO 2011/061289 (26.05.2011 Gazette 2011/21)**

(54) **PORÖSES SiO2-XEROGEL MIT CHARAKTERISTISCHER PORENGRÖSSE, DESSEN TROCKNUNGSSTABILE VORSTUFEN UND DESSEN ANWENDUNG**

POROUS SIO2-XEROGEL WITH A CHARACTERISTIC PORE SIZE, STABLE DRYING PRECURSORS THEREOF AND USE OF SAME

XÉROGEL DE SIO2 POREUX AYANT UNE TAILLE DES PORES CARACTÉRISTIQUE, SES PRÉCURSEURS STABLES AU SÉCHAGE ET SON UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.11.2009 DE 102009053782**

(43) Veröffentlichungstag der Anmeldung:
**26.09.2012 Patentblatt 2012/39**

(73) Patentinhaber:
• **BSH Hausgeräte GmbH**
  **81739 München (DE)**
• **Bayerisches Zentrum Für Angewandte Energieforschun E.V.**
  **97074 Würzburg (DE)**

(72) Erfinder:
• **EBERT, Hans-Peter**
  **97338 Dettelbach (DE)**
• **NOISSER, Theresa**
  **97076 Würzburg (DE)**
• **REICHENAUER, Gudrun**
  **97218 Gerbrunn (DE)**
• **WEIGANG, Lena**
  **97074 Würzburg (DE)**

(74) Vertreter: **Lang, Michael**
  **BSH Hausgeräte GmbH**
  **Zentralabteilung Gewerblicher Rechtsschutz**
  **Carl-Wery-Str. 34**
  **81739 München (DE)**

(56) Entgegenhaltungen:
**DE-A1- 19 721 600**

• **LARSEN GUSTAVO ET AL: "Amine dendrimers as templates for amorphous silicas", JOURNAL OF PHYSICAL CHEMISTRY. B, MATERIALS, SURFACES, INTERFACES AND BIOPHYSICAL, WASHINGTON, DC, US, Bd. 104, Nr. 20, 1. Januar 2000 (2000-01-01), Seiten 4840-4843, XP002213390, ISSN: 1089-5647, DOI: DOI:10.1021/JP000301V**
• **M.A. EINARSRUD, S. HEAREID, V. WITTWER: "Some thermal and optical properties of a new transparent silica xerogel material with low density", SOLAR ENERGY MATERIALS AND SOLAR CELLS, Bd. 31, 1993, Seiten 341-347, XP002624569,**
• **WANG L J ET AL: "Structural characteristics and thermal conductivity of ambient pressure dried silica aerogels with one-step solvent exchange/surface modification", MATERIALS CHEMISTRY AND PHYSICS, ELSEVIER, SWITZERLAND, TAIWAN, REPUBLIC OF CHINA, Bd. 113, Nr. 1, 15. Januar 2009 (2009-01-15), Seiten 485-490, XP025694787, ISSN: 0254-0584, DOI: DOI:10.1016/J.MATCHEMPHYS.2008.07.124 [gefunden am 2008-09-11]**

EP 2 501 652 B1

- JAIN ANURAG ET AL: "Processing dependent thermal conductivity of nanoporous silica xerogel films", JOURNAL OF APPLIED PHYSICS, AMERICAN INSTITUTE OF PHYSICS. NEW YORK, US, Bd. 91, Nr. 5, 1. März 2002 (2002-03-01), Seiten 3275-3281, XP012055950, ISSN: 0021-8979, DOI: DOI:10.1063/1.1448407

## Beschreibung

### [Beschreibung]

Gegenstand dieser Erfindung ist ein poröses $SiO_2$-Xeroge mit charakteristischer Porengröße kleiner 1 Mikrometer, welches unter Einsatz von temporären Porenfüllern oder Festkörperskelettstützen, die am Ende des Herstellungsprozesses oxidativ thermisch entfernt werden (z.B. Kohlenstoff oder Organik), über einen Sol-Gel-Prozess mit unterkritischer Trocknung des Gels hergestellt wird. Die zusätzlichen organischen Partikel bzw. Makromoleküle oder die Kohlenstoffpartikel im anorganischen Gel verhindern ein Kollabieren des anorganischen Netzwerkes während des unterkritischen Trocknungsprozess. Anschließend werden diese Porenfüller oder Festkörperskelettstützen durch Temperaturbehandlung oberhalb von 300°C weitestgehend oxidativ entfernt. Ergebnis ist ein $SiO_2$-Xeroge (mit einem Massenanteil an Fasern < 5 Gew.%.) mit einer Porosität > 80 %, einem Kohlenstoff-Anteil kleiner als 10%, der nicht oder nur schwach chemisch an das silikatische Gerüst gebunden ist, und Poren im Bereich kleiner 1 Mikrometer.

### [stand der Technik]

Aerogele, Kryogele und Xerogele kommen in vielen Bereichen zur Anwendung. Grundsätzlich unterscheiden sich die genannten Materialien durch die Art der Trocknungsmethode. Aerogel ist ein Oberbegriff für alle Gele mit einem geringen Feststoffanteil, deren Poren mit Luft gefüllt sind, im engeren Sinn definieren sie sich jedoch durch eine überkritische Trocknung, Kryogele durch Gefriertrocknung und Xerogele durch konvektive unterkritische Trocknung.

Bei dem vorliegenden erfindungsgemäßen Aerogel handelt es sich also genau genommen durchgehend um ein Xerogel.

Durch ihre äußerst geringen Dichten und ihre hohen Porositäten von typischerweise 85% und mehr sind Silica-Aerogele hervorragend Dämmmaterialien, die man im Gegensatz zu organischen Materialien auch bei hohen Temperaturen einsetzen kann. Bei nichtevakuierten Materialien würden organische Anteile oberhalb von 250°C mit dem in der Luft vorhandenem Sauerstoff verbrennen.

Die Herstellung hochporöser Festkörper über Sol-Gel-Verfahren benötigt normalerweise einen überkritischen Trocknungschritt, um die Porenstruktur zu erhalten. Diese Trocknung ist zum einen zeigt- und ressourcenaufwändig, da das Lösungsmittel in den Poren im Allgemeinen zunächst getauscht werden muss. Zum anderen is-t sie energieaufwändig, da in Autoklaven bei hohem Druck gearbeitet wird. Prozesstechnisch ungünstig ist die Prozessierung im Autoklaven auch aufgrund der nichtkontinuierlichen Verarbeitung (Batch-Prozess). Konvektive Trocknung bei 1 bar (unterkritische Trocknung) führt durch die auftretenden großen Kapillarkräfte zum Kollabieren des Porengerüsts, weshalb monolithische Materialien mit hoher Porosität nur schwer herzustellen sind. Dadurch weisen Xerogele höhere Dichten und daher auch weniger gute Wärmedämmeigenschaften als Aerogele auf.

Das in [WO2005068361] hergestellte Aerogel muss überkritisch getrocknet werden und ist somit kostspielig und aufwändig in der Herstellung.

Um die überkritische Trocknung zu umgehen und trotzdem geringe Dichten zu erhalten, gibt es einige allgemeine Ansätze. Einarsud et al. haben ein Verfahren entwickelt, das die Schrumpfung bei der unterkritischen Trocknung durch ein Versteifen des Gelgerüstes im Nassgel verringert [Einarsrud, M.A., E. Nilsen, A. Rigacci, G.M. Pajonk, S. Buathier, D. Valette, M. Durant, B. Chevalier, P. Nitz, and F. Ehrburger-Dolle, Strengthening of silica gels and aerogels by washing and aging processes. Journal of Non-Crystalline Solids, 2001. 285 1-7.2001]. allerdings wird mit diesem Verfahren trotz niedriger Dichte des resultierenden Xerogels die Festkörperwärmeleitung erhöht, da lokal die Kontakte zwischen den Silica-Partikeln im Gelgerüst systematisch erhöht werden. Ein weiterer Nachteil sind die zusätzlich erforderlichen Verfahrensschritte, die zwei zeitaufwändige Lösungsmittelaustauschschritte beinhalten und die langen Zeiten, die für eine rissfreie Trocknung makroskopischer Formkörper erforderlich sind.

Um eine Nachvernetzung der Oberflächen-Hydroxygruppen (bei der Komprimierung des Gels durch die Kapillarkräfte) während des Trocknens und damit eine irreversible Schrumpfung zu verhindern, können wie in [EP0690023A2], [WO001998005591A1] oder [WO001996022942A1] diese Gruppen mit einem Silylierungsmittel umgesetzt werden. Diese Methode bedeutet jedoch immer einen weiteren langwierigen Lösungsmitteltausch und einen weiteren Syntheseschritt und verhindert nicht die große temporäre Schrumpfung der Probe bei der unterkritischen Trocknung, die insbesondere bei Formkörpern mit Abmessungen im cm-Bereich und größer leicht zu Rissbildungen führen kann oder eine sehr langsame Trocknung erfordert. Diese silylierten, hydrophobierten Gele sind nicht bei Anwendungstemperaturen über 250°C einsetzbar, da sonst die organischen Oberflächengruppen zerstört werden und somit auch der gewünschte Effekt, wie z.B. die Hydrophobie bei [WO001998005591A1], zerstört wird.

$SiO_2$-Xerogele werden auch in Larsen Gustavo et al: "Amine dendrimers as templates for amorphous silicas", Journal of Physical Chemistry. B. Materials, Surfaces, Interfaces and Biophysical, Washington, DC, US, Bd. 104, Nr. 20, . Januar 2000 (2000-01-01), Seiten 4840-4843; DE 197 21 600 A1; sowie M.A. Einarsrud, D. Heareid, V. Wittwer: "Some thermal and optical properties of a new transparent silica xerogel material with low density", Solar Energy Materials and Solar Cells, Bd. 31, 1993, Seiten 341-347, beschrieben.

**[Aufgabe der Erfindung]**

Aufgabe der Erfindung ist ein porösen $SiO_2$-Xerogel welches sowohl die geringe Dichte eines Aerogels aufweist und somit auch eine entsprechend niedrige Wärmeleitfähigkeit besitzt als auch bei Temperaturen oberhalb 300°C zur Anwendung kommen kann und welches eine gute mechanische Stabilität aufweist (E-Modul größer als 5 MPa). Die Herstellung erfolgt durch unterkritische Trocknung.

Um bei Xerogelen, also unterkritisch getrockneten Gelen, eine geringe Dichte und eine niedrige Wärmeleitfähigkeit zu erreichen, gibt es erfindungsgemäß zwei Lösungsansätze für die Ausführung eines trocknungsstabilen Zwischenproduktes bzw. einer trocknungsstabilen Vorstufe.

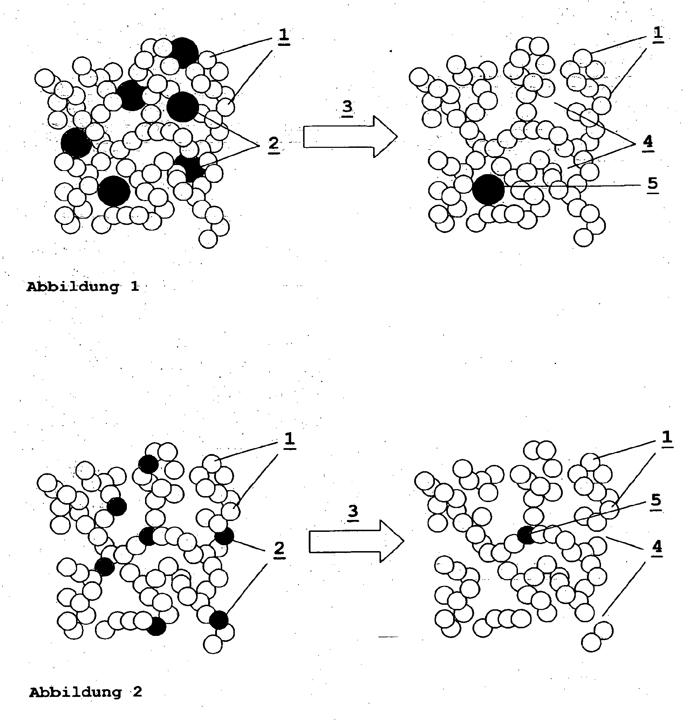

Der erste Lösungsansatz sieht ein $SiO_2$-Xeroge mit teilweise mit einer organischen oder einer Kohlenstoff-Komponente gefüllten Poren vor. Als organische Komponente wird im nachfolgenden eine Komponente bezeichnet, die einen Aschegehalt kleiner als 20 Gew.% aufweist. Um das durch den Sol-Gel-Prozess gebildete Gerüst während der Trocknung mechanisch zu unterstützen, werden organische Anteile oder Kohlenstoffkomponenten in das Gel eingebracht, welche einen Teil der beim Sol-Gel-Prozess gebildeten Poren füllen und so ein Zusammenziehen des Gelgerüstes beim Trocknen mechanisch verhindern bzw. reduzieren. In Abbildung 1 ist schematisch das anorganische Netzwerk (1) mit den organischen oder Kohlenstoff-Komponenten als Porenfüller (2) gezeigt. Die Partikelgröße muss dabei im Bereich kleiner als die max. zulässige Porengröße sein.

Der zweite Lösungsansatz erfolgt über ein $SiO_2$-Xerogel mit kugelähnlichen, organischen Komponenten, die chemisch in das $SiO_2$-Netzwerk eingebaut sind. Um dem Kapillardruck beim Trocknen standzuhalten und somit ein Kollabieren des Netzwerkes oder einer irreversiblen Schrumpfung entgegenzuwirken, werden organische, kugelähnliche Komponenten als mechanische Stütze im Festkörperskelett benötigt (Abbildung 1 und 2; links).

Durch einen angeschlossenen Oxidationsschritt (3) werden diese organischen oder Kohlenstoff-Anteile beim ersten Ansatz weitestgehend aus den Poren bzw. beim zweiten Ansatz aus dem Festkörperskelett entfernt (Abbildung 1 und 2; rechts). Dies ist in Abbildung 1 (rechts) schematisch für den Fall der teilweise gefüllten Poren und in Abbildung 2 (rechts) für die in das organische Netzwerk integrierten Komponenten gezeigt; durch Oxidation gebildete Fehlstellen oder Poren sind mit (4) gekennzeichnet, verbleibende, da nicht über Oxidation entfernt nicht-silikatische Komponenten sind jeweils mit (5) gekennzeichnet.

Aerogele bestehen aus dreidimensional vernetzten ketten von kugelähnlichen Primärpartikeln im Nanometerbereich. Die Gesamtwärmeleitfähigkeit in Silica-Aerogelen wird von drei Faktoren bestimmt: Gas-, Strahlungs- und Festkörperwärmeleitung. Da Silica-Aerogele für IR-Strahlung nahezu vollständig durchsichtig sind, ist der Wärmeübertrag durch Strahlung gerade bei höheren Temperaturen für diese nicht zu vernachlässigen (~$T^3$). Durch die Zugabe bzw. Integration von Trübungsmitteln (= Pigmenten) oder durch die Verwendung von Berandungen mit niedriger Strahlungsemission (low-e-Berandungen) lässt sich dieser Beitrag ausreichend reduzieren. Aerogele und Xerogele besitzen im Allgemeinen eine hohe optische Transparenz. Für Anwendungen, die keine optische Durchlässigkeit erfordern, wie opake Dämmungen, kann gezielt auf die optische Transparenz verzichtet werden; die Einbringung von Komponenten, die die Durchlässigkeit des Stoffes im Infraroten Wellenlängenbereich reduzieren und damit auch den Wärmetransport über Strahlung vermindern, hat i.a. auch eine optische Trübung des Stoffes über Absorption oder Streuung zur Folge. Damit der Strahlungstransport effektiv unterdrückt wird, werden erfindungsgemäß Xerogele mit geringer Transparenz auch im sichtbaren Spektralbereich bevorzugt.

Der Beitrag der Gaswärmeleitung entsteht durch Wärmeübertragung bei Stößen der Gasmoleküle in den Poren untereinander. Bei Porendurchmessern unter 1 Mikrometer kann man diesen Beitrag stark reduzieren, da mit abnehmender Porengröße die Wahrscheinlichkeit für Stöße der Gasmoleküle untereinander abnimmt. Mit abnehmender Porengröße nehmen bei gegebener Dichte des Gelgerüsts aufgrund von Kapillarkräften die Schrumpfung der Probe bei der unterkritischen Trocknung und damit auch die Dichte des resultierenden Xerogels zu. Die größere Dichte des Materials erhöht den Beitrag der Festkörperleitung. Ziel ist es also Porengrößen kleiner als 1000 nm nach Möglichkeit sogar kleiner als 300 nm im Material zu generieren und trotz unterkritischer Trocknung und Verzicht auf Lösungsmittelaustausch ein Xerogel hinreichend kleiner Dichte (kleiner als 400 kg/m$^3$) zu erhalten. Um dem Kapillardruck, beim unterkritischen Trocknen standzuhalten und somit ein Kollabieren des Netzwerkes oder einer irreversiblen Schrumpfung entgegenzuwirken, wird erfindungsgemäß eine organische oder Kohlenstoff-haltige, kugelähnliche Komponente als mechanische Stütze in mindestens 10% der Poren benötigt oder eine organische oder kohlenstoffhaltige, kugelähnliche Komponente in das Festkörperskelett eingebaut.

Die vorliegende Erfindung betrifft ein Xerogel, welches aus einer silikatischen Verbindung, z.B. einem Siliciumalkoxid (z.B. TMOS oder TEOS) oder Wasserglas in saurem oder basischem Milieu hergestellt wird und welchem in der Ausgangslösung, der Sol-Phase oder nach begonnener Gelierung (für ein porengefülltes Xerogel) entsprechende organische oder Kohlenstoffbestandteile, wie beispielsweise auf der Basis von Kohlenwasserstoffen, Epoxiden, Aminen, Polyestern, Polyimiden, Polyurethanen, Biopolymeren wie z.B. Proteinen oder Polysacchariden (Mehl, Reisstärke, Melasse, Zuckerrübensirup), Bakterien (z.B. Milchsäurebakterien) oder technischen Rußen (Farbruß, Leitruß, Füllruß), Carbon Nanotubes, Fullerene, Graphitpulver, zugesetzt werden, oder für ein festkörperskelettgestütztes Xerogel entsprechende organische Bestandteile, wie beispielsweise organische Makromoleküle (z.B.' Kohlenwasserstoffe, Epoxide, Amine, Polyester, Polyimide, Polyurethane, Proteine) zugesetzt werden. ' Durch die Wahl gut dispergierbarer und nicht aggregierender Partikel oder gut löslicher Moleküle oder gezielter Dispergierhilfen wie z.B. durch Ultraschallbehandlung oder Verscheerung [Tillotson, T. M., Hrubesh, L. W., Simpson, R. L., Lee, R. S., Swansiger, R. W., Simpson, L. R. Sol-gel processing of energetic materials. Journal of Non-Crystalline Solids, 1998. 225(1), 358-363] wird eine gleichmäßige Verteilung der Bestandteile über das gesamte Material gewährleistet. Bei langen Gelierzeiten des anorganischen Netzwerks kann eine homogene Verteilung von feinteiligen organischen oder Kohlenstoffpartikeln dadurch gelöst werden, dass zunächst die Bildung eines anorganischen Netzwerks zugelassen wird, dieses jedoch zum Teil z.B. durch Ultraschallbehandlung oder Verscheerung zerstört wird. Bei der Einbringung von Monomeren werden die Edukte so gewählt, dass eine gute Löslichkeit gewährleistet ist. Dies geschieht entweder durch die geeignete Wahl der Monomere oder indem Linkergruppen eingesetzt werden, um das synthetisierte Polymer kovalent an das Netzwerk zu binden. Dies wird erfindungsgemäß dadurch erreicht, dass die Oberfläche der Silica-Sol-Partikel in situ mit entsprechenden funktionellen Gruppen versehen wird. Setzt man die modifizierten organischen Partikel mit einem einfachen Silica-Precursor wie beispielsweise TEOS oder TMOS um, bilden sich im Fall der porengefüllten Xerogele entsprechende Ketten aus Primärpartikeln um die organischen Partikel herum, bei den festkörperskelettgestützten Xerogelen werden diese in das SiO2-Netzwerk eingebaut, die Stabilität des Gelgerüstes wird durch zusätzliche organisch-anorganische Vernetzung gewährleistet.

Sowohl das porengefüllte Xerogel als auch das festkörperskelettgestützte Xerogel können entweder über ein Rottom-Up-Verfahren oder über ein Top-Down-Verfahren hergestellt werden. "Top-Down" bezeichnet generell den Weg, aus Festkörpern oder Pulvern durch Zerkleinerung die gewünschte Partikelgröße der organischen oder Kohlenstoff-Komponente herzustellen. Bei den hier beschriebenen Verfahren bedeutet es, verfügbare Festkörperpartikel in das Material einzudringen. In "Bottom-Up"-Verfahren wird von molekularen Vorstufen ausgegangen und die gewünschten Partikel in situ aufgebaut.

Beim porengefüllten Xerogel und dessen Herstellung über das Top-Down-Verfahren wird während der Gelierung das $SiO_2$-Netzwerk (1) um die organischen Partikel (2) ausgebildet, ohne diese ins Netzwerk einzubauen. Daher sind diese kugelähnlichen Partikel (2) allerhöchstens schwach chemisch an das Netzwerk (1) gebunden.

Beim porengefüllten Xerogel und dessen Herstellung über das Bottom-Up-Verfahren wird in der Ausgangslösung in situ ein organisches, kugelähnliches Polymer (2) aufgebaut (z.B. über Ko-Gelierung und/oder Phasentrennung), welches allerhöchstens schwach chemisch in den Poren eingelagert wird und das anorganische Netzwerk (1) bei der Trocknung teilweise unterstützt.

Beim festkörperskelettgestützten Xerogel und dessen Herstellung über das Top-Down-Verfahren werden während der Gelierung des $SiO_2$-Netzwerks (1) organische Partikel (2) eingebaut. Daher sind diese kugelähnlichen Partikel (2) direkt in das Netzwerk (1) integriert und dort chemisch gebunden.

Beim festkörperskelettgestützten Xerogel und dessen Herstellung über das Bottom-Up-Verfahren wird in der Ausgangslösung ein organische, kugelähnliches Polymer (2) aufgebaut, welches in das $SiO_2$-Netzwerk (1) während dessen Bildung eingebaut wird. Alternativ kann man auch zunächst einen Sol-Gel-Übergang zulassen, das gebildete Nassgel-Netzwerk dann mechanisch (z.B. durch Ultraschall oder Hächsler) z.T. zerstören und durch die Zugabe der organischen Komponente über funktionelle Gruppen eine chemische Vernetzung mit dem $SiO_2$.-Netzwerk initiieren. Daher sind diese kugelähnlichen Partikel (2) direkt in das Netzwerk (1) integriert und dort chemisch gebunden.

Diese kugelähnlichen organischen oder Kohlenstoffpartikel dienen als temporäre Porenfüller oder temporäre Festkörperskelettstützen und werden nach der Trocknung des Gels ausgebrannt (3), wodurch zusätzliche Poren (4) in einer einstellbaren Größe im anorganischen Netzwerk freigelegt werden oder Unterbrechungen im $SiO_2$-Netzwerk entstehen.

Bei dem porengefüllten Xerogel entstehen nach dem Ausbrennen der Organik bzw. des Kohlenstoffs entsprechende Poren (4), die eine Reduktion der Dichte, und damit verbunden eine reduzierte Festkörperleitung zur Folge haben.

Bei dem festkörperskelettgestützten Xerogel entstehen nach dem Ausbrennen der Organik entsprechende Fehlstellen (4) im Festkörperskelett, die gleichfalls zu einer Reduktion der Festkörperleitung führen und kleine Poren zurücklassen.

Die morphologischen und physikalischen Eigenschaften dieser beiden entstandenen Materialien lassen sich kaum voneinander unterscheiden, da die Entstehung der Poren bzw. Fehlstellen zwar anderen Ursprungs ist, aber durchaus in der gleichen Größenordnung liegen kann und somit zum gleichen, gewünschten, erfindungsgemäßen Effekt-führt. Bei Bedarf kann im Falle des Porenfülleransatzes über die Größe der organischen oder Kohlenstoff-Komponente eine Porengröße im Xerogel definiert werden, die sich deutlich von der unterscheidet, die sich durch den Sol-Gel-Übergang des anorganischen Gels allein entsteht. In solches Xerogelen liegen bimodale Porenradienverteilungen vor.

Zusätzliche Pigmente können sowohl während des Sol-Gel-Prozesses als auch nachträglich in das Nassgel eingebracht werden.

Sowohl nach dem Top-Down- als auch nach dem Bottom-Up-Verfahrensschritt liegt nun ein anorganisches Xerogel mit organischen oder mit Kohlenstoff-Partikeln gefüllten Poren bzw. Festkörperskelettstützen vor. Die Dichte dieses Xerogels liegt zwischen 150 und 600 kg/m$^3$ und der temporäre Volumenanteil von organischen oder Kohlenstoff-Partikeln beträgt zwischen 10% und 60%.

Erfindungsgemäß wird das Xerogel einer Temperaturbehandlung oberhalb 300°C unterzogen. Bei diesem angeschlossenen Verfahrensschritt werden die organischen oder Kohlenstoff-Partikel aus dem Gelgerüst weitestgehend entfernt.

Ein Kohlenstoff-Rest (5) (< 10%) im Material, der trotz Temperaturbehandlung nicht aus dem SiO$_2$-Netzwerk zu entfernen ist bzw. gezielt dort verbleibt, trägt zu einer IR-Trübung des Materials bei. Dies führt zu einer Reduktion der Strahlungswärmeleitung, die gerade bei hohen Temperaturen in Silica-Xerogelen einen nicht unerheblichen Beitrag von beispielsweise 30 % bis 50 % bei 0 °C bis zu 90% bei 170 °C zur Gesamtwärmeleitfähigkeit leistet.

Das erfindungsgemäße Silica-Xerogel zeigt folgende Eigenschaften:

Die Porengrößen liegen zwischen 1000 nm und 50 nm, die Dichte liegt zwischen 400 kg/m$^3$ und 100 kg/m$^3$. Die Bestimmung der mittleren Größe $d$ der Poren erfolgt aus der makroskopischen Dichte des Xerogels $\rho$ und der spezifischen externen Oberfläche $S_{ext}$. Dabei wird $S_{ext}$ als Differenz der spezifischen Oberfläche nach dem BET-Verfahren $S_{BET}$ (ISO 9277:1995 und DIN 66-35-2:200.1-06) und der spezifischen Mikroporenoberfläche $S_{Mik}$(ISO15901-3) berechnet; damit ergibt sich $d$ zu $d$=4 · (1/$\rho$-1/$\rho_{SiO2}$)/$S_{ext}$. Dabei ist $\rho$ die makroskopische Dichte des Formkörpers und $\rho_{SiO2}$ die Dichte von unporösem amorphem SiO$_2$-Glas (=2,2 g/cm$^3$). Bei bimodalen Porenverteilungen, bei denen der Durchmesser einer Gruppe von Poren unter 100 nm liegt, wird die Porenverteilung der Poren < 100 nm mit BJH-Analyse der Stickstoffsorptionsisothermen nach DIN 66134 Norm (1998-02) bestimmt; der entsprechende Mittelwert wird als d" bezeichnet. Die mittlere Größe der Poren > 100 nm $d'$ ergibt sich aus der Differenz von Gesamtporenvolumen $V_{P,Gesamt}$ = (1/$\rho$-1/$\rho_{SiO2}$) und dem Porenvolumen $V_{p,<100}$ der Poren kleiner 100 nm, das nach der Gurvich-Regel aus der gemessenen Isotherme bestimmt wird, sowie der Differenz von externer Oberfläche $S_{ext}$ und der externen Oberfläche der Poren kleiner 100 nm $S_{ext}$, <100 = 4*($V_{p,<100}$) / $d'$ zu $d$=4 · ( $V_{P,Gesamt}$- $V_{p, <100}$) / $S_{ext}$- $S_{ext}$, <100).

Bei bimodalen Verteilungen mit Poren > 100 nm wird die Verteilung mit Hilfe von Quecksilberporosimetrie (ISO 15901-1) bestimmt.

Die Rosseland-gemittelte IR-Extinktion beträgt bei 300 K mindestens 50 m$^2$/g ohne Pigmente und mindestens 80 m$^2$/kg mit Pigmenten (spektrales Mittelungsintervall von 1,4 μm bis 35,0 μm). Der Wert wird durch Bestimmung der direkthemisphärischen Transmission und Reflexion im Wellenlängenbereich von 1,4 μm bis 35,0 μm ermittelt.

Die mechanische Stabilität zeichnet sich durch ein E-Modul > 5 MPa aus. Der E-Modul kann entweder über ein statisches Verfahren bestimmt werden bei dem die relative Längenänderung $\Delta L/L$ der Probe bei uni-direktionalem Druck p Bestimmt wird:

$$E = \frac{p}{\Delta L / L}$$

Alternativ kann der E-Modul aus der Schallgeschwindigkeit v nach $E = v^2\rho$ mit der Dichte $\rho$ berechnen.

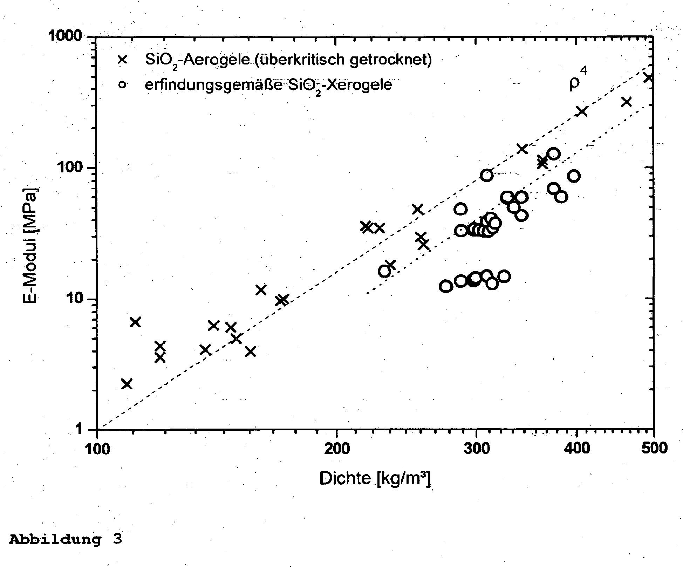

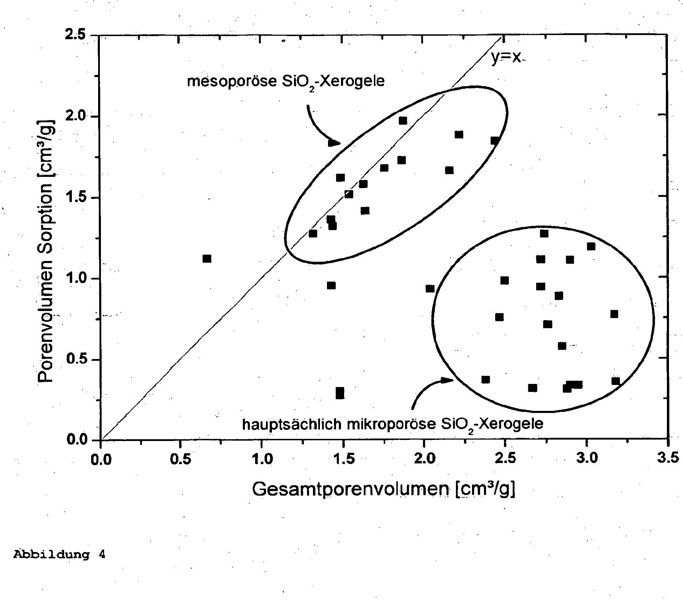

Beispiele für E-Module und Porendurchmesser der erfindungsgemäßen, festkörperskelettgestützten SiO$_2$-Xerogele sind in Abbildung 3 und Abbildung 4 gezeigt.

**[Beispiele]**

Für alle erfindungsgemäßen Verfahren eignen sich für das silicatische Netzwerk alle Komponenten oder deren Gemische, die in polar protischen Lösemitteln (vorzugsweise Mischungen von Wasser und einem Alkohol, hier vorzugsweise Ethanol) polymere Netzwerke bilden können. Beispiele sind Wasserglas, Kieselsäuren (pyrogene Kieselsäuren wie Aerosil®, Fällungskieselsäuren), Schichtsilicate, Alkoxysilane, modifizierte Alkoxysilane. Vorzugsweise Alkoxysilane der allg. Formel Si(OR)$_4$ (mit R = organischer Rest), hier vorzugsweise Tetraethoxysilan (TEOS, Si(OEt)$_4$) und organisch modifizierte Alkoxysilane der allg. Formel R$_n$Si(OR')$_{4-n}$ (mit n = 0-3; R, R' = organische Reste).

Für die beiden erfindungsgemäßen Bottom-Up-Verfahren eignen sich prinzipiell alle in polar protischen Lösemitteln (vorzugsweise Mischungen von Wasser und einem Alkohol, hier vorzugsweise Ethanol) löslichen Polymer-, Polykondensat-, oder Polyaddukvorstufen (= Monomere) bzw. Copolymer-, Cokondensat- oder Coadduktvorstufen, die hierin vernetzt werden können und Mischungen hieraus, z.B. Monomere für Resorcin-Formaldehydharze, Epoxide, Amine, Polyester, Polyimide oder Polyurethane.

Vorzugsweise werden Monomere oder deren Gemische ausgewählt, die durch Einstellung des pH-Wertes und der Temperatur im gleichen Bereich wie das anorganische Netzwerk polymerisieren bzw. -kondensieren.

Zusätze sind neben Katalysatoren und im Falle radikalischer Polymerisation Radikalstartern alle Stoffe, die die Dispergierbarkeit oder Löslichkeit der organischen Polymerpartikel durch physikalische oder chemische Bindungen erhöhen, z.B. auch Lösemittler.

In der Mischung enthaltene Siliciumalkoxide der allgemeinen Formel $R_nSi(OR')_4$-n (mit n = 0-3; R, R' = organischer Rest) verhindern eine Entmischung der kohlenstoffhaltigen und silicatischen Phase bzw. bilden Linkergruppen zwischen den organischen Partikeln-und dem anorganischen Netzwerk. "Organische Polymervorstufen oder deren Gemische" bezeichnet somit alle Komponenten, die zur Ausbildung eines Polymernetzwerkes in polar protischen Lösemitteln notwendig sind.

Für die beiden erfindungsgemäßen Top-Down-Verfahren eignen sich prinzipiell alle in polar protischen Lösemitteln (vorzugsweise Mischungen von Wasser und einem Alkohol, hier vorzugsweise Ethanol) dispergierbaren oder löslichen oxidativ entfernbaren Partikel mit Durchmessern kleiner 1 Mikrometer. Einige Beispiele für organische Polymerisate, Polykondensate (z.B. Resorcin-Formaldehydharze) oder Polyaddukte bzw. Copolymerisate, Cokondensate oder Coaddukte sind Kohlenwasserstoffe, Epoxide, Amine, Polyester, Polyimide, Polyurethane aber auch Biopolymere wie z.B. Polysaccharide (Mehl, Reisstärke, Melasse, Zuckerrübensirup). Beispiele für anorganische, jedoch oxidativ entfernbare Porenfüller sind Kohlenstoffe wie technische Ruße, (Farbruß, Leitruß, Füllruß), Carbon Nanotubes, Fullerene, und Graphitpulver. Zusätze sind neben Katalysatoren alle Stoffe, die die Dispergierbarkeit oder Löslichkeit der organischen Polymerpartikel bzw. der Kohlenstoffpartikel durch physikalische oder chemische Bindungen erhöhen, z.B. auch Lösungsvermittler.

In der Mischung enthaltene Siliciumalkoxide der allgemeinen Formel $R_nSi(OR')_4$-n (mit n = 0-3; R, R' = organischer Rest) verhindern eine Entmischung der kohlenstoffhaltigen und silicatischen. Phase bzw. bilden Linkergruppen zwischen den organischen Partikeln und dem anorganischen Netzwerk. "Organische Polymere oder deren Gemische" bezeichnet somit alle Komponenten die zur Dispersion in polar protischen Lösemitteln notwendig sind.

Beim erfindungsgemäßen Verfahren werden Siliciumverbindungen, z.B. Siliciumalkoxide der allgemeinen Formel $Si(OR)_4$ oder Wasserglas (nach Abtrennen der Kationen durch einen Ionentauscher) mit Wasser in saurem oder basischem Milieu entweder in einer Dispersion von organischen Nanopartikeln bzw. Kohlenstoffpartikeln und entsprechenden Zusätzen umgesetzt oder die Siliciumverbindungen werden mit Wasser in saurem oder basischem Milieu umgesetzt, in der durch Ultraschall unterbrochenen Gelierung mit organischen oder Kohlenstoff-Partikeln (Durchmesser kleiner 1 Mikrometer) vermengt und die Gelierung anschließend fortgesetzt. Nach der beendeten Gelierung wird.das Nassgel bei 1 bar getrocknet und die organische Phase anschließend durch Temperaturbehandlung oberhalb von 300°C entfernt.

Ausführungsbeispiel 1:

Resorcin wird in Ethanol aufgelöst und unter Rühren mit Wasser, Formaldehyd und einer 0,1 normalen Lösung von Natriumcarbonat in Wasser bei 50°C versetzt und gerührt. Nach Abkühlen auf 20°C wird ebenfalls unter Rühren Tetraethoxysilan (TEOS), Ethanol, Wasser und eine 0,05 molaren Ammoniumhydroxidlösung zugeben, kurz gerührt und die Mischung, in geschlossene Gefäße bei 30°C zur Gelierung gegeben. Nach Ende der Gelierung wird der gebildete Monolith für 7. Tage in Ethanol gelegt und anschließend bei 1 bar Umgebungsdruck und 30°C getrocknet. Das erhaltene Xerogel wird nun unter Schutzgasatmosphäre (Argon) bei 550°C pyrolysiert und anschließend bei 550°C und sauerstoffhaltiger Atmosphäre erhitzt.

Ausführungsbeispiel 2:

Tetraethoxysilan (TEOS) wird mit Ethanol, Wasser und einer 0,05 molaren Ammoniumhydroxidlösung versetzt und bei 20°C zur Reaktion gebracht. Sobald die Lösung zähflüssig wird (Beginn der Gelierung), wird die Reaktionslösung Ultraschall (hoher Intensität) ausgesetzt und währenddessen mit einer Suspension von technischem Ruß in Ethanol vermengt. Nach erfolgter Dispersion der Partikel über die Reaktionsmischung wird die Gelierung bei 30°C ohne Rührung in einem geschlossenen Gefäß fortgesetzt. Nach Ende der Gelierung wird der gebildete Monolith für 7 Tage in Ethanol gelegt und anschließend bei 1 bar Umgebungsdruck und 30°C getrocknet. Das erhaltene Xerogel wird nun unter Schutzgasatmosphäre (Argon) bei 550°C pyrolysiert und anschließend bei 550°C und sauerstoffhaltiger Atmosphäre erhitzt.

Ausführungsbeispiel 3:

Neopentylglycol-diglycidylether wird in Ethanol unter Rühren mit Diethylentriamin bei 50°C umgesetzt. Anschließend wird 3-Glycidyloxypropyltrimethoxysilan (GLYMO) zugegeben und die Reaktionsmischung bei 50°C gerührt. Zu der Reaktionsmischung wird nach Abkühlen Wasser und eine 0,05 molare Ammoniumhydroxidlösung gegeben und bei 20°C weiter gerührt. Danach wird Tetraethoxysilan (TEOS) zugesetzt, noch kurz gerührt und die Mischung in geschlossene Gefäße bei 30°C zur Gelierung gegeben. Nach Ende der Gelierung wird der gebildete Monolith für 7 Tage in Ethanol gelegt und anschließend bei 1 bar Umgebungsdruck und 30°C getrocknet. Das erhaltene Xerogel wird nun unter Schutzgasatmosphäre (Argon) bei 550°C pyrolysiert und anschließend bei 550°C und sauerstoffhaltiger Atmosphäre erhitzt.

Ausführungsbeispiel 4:

Zu einer Lösung von Hydroxypropylcellulose in einem Ethanol/Wasser-Gemisch wird Tetraethoxysilan (TEOS) und eine 0,05 molaren Ammoniumhydroxidlösung gegeben und bei 30°C zur Reaktion gebracht, kurz gerührt und die Mischung in geschlossene Gefäße bei 30°C zur Gelierung gegeben. Nach Ende der Gelierung wird der gebildete Monolith für 7 Tage in Ethanol gelegt und anschließend bei 1 bar Umgebungsdruck und 30°C getrocknet. Das erhaltene Xerogel wird nun unter Schutzgasatmosphäre bei 550°C pyrolysiert und anschließend bei 550°C und sauerstoffhaltiger Atmosphäre erhitzt.

**[Bezugszeichenliste]**

1    $SiO_2$ Gerüst
2    organische oder Kohlenstoff-Komponente
3    Verbrennungsvorgang der organischen Bestandteile
4    erhalten gebliebene Pore oder Fehlstelle
5    verbliebene kohlenstoffhaltige Komponente

**[Literatur]**

[WO001998005591A1]
[EP0690023A2]
[DE3346180C2]
[WO2005068361]

**Patentansprüche**

1. Poröses $SiO_2$-Xeroge **dadurch gekennzeichnet, dass** es Poren grösser als 50 nm, aber kleiner als 1000 nm, insbesondere kleiner als 500 nm, insbesondere kleiner als 300 nm, insbesondere kleiner als 100 nm aufweist, eine Dichte kleiner als 400 kg/m$^3$, insbesondere kleiner als 290 kg/m$^3$, insbesondere kleiner als 200 kg/m$^3$ hat, der Kohlenstoff-Anteil kleiner als 10%, insbesondere kleiner 5% ist und die Wärmeleitfähigkeit bei 800°C unterhalb von 0,060 W/m*K, bei 400°C unterhalb von 0,040 W/m*K, bei 200°C unterhalb von 0,030 W/m*K liegt.

2. $SiO_2$-Xeroge nach Anspruch 1 **dadurch gekennzeichnet, dass** es ein Elastizitätsmodul von mindestens 5 MPa aufweist.

3. $SiO_2$-Xeroge nach einem der Ansprüche 1 oder 2 **dadurch gekennzeichnet, dass** es bei Temperaturen bis 560°C (in sauerstoffhaltiger Atmosphäre) thermisch langzeitstabil ist.

4. $SiO_2$-Xeroge nach einem der Ansprüche 1, 2 oder 3 **dadurch gekennzeichnet, dass** es monolithischer Formkörper, ein Granulat oder ein Pulver ist.

5. $SiO_2$-Xeroge nach einem der Ansprüche 1, 2, 3 oder 4 **dadurch gekennzeichnet, dass** der Faseranteil kleiner als 5 Gew.-% ist.

6. Verwendung eines $SiO_2$-Xerogels nach einem der Ansprüche 1 bis 5 als nicht brennbare oder nicht entflammbare, transparente oder transluzente oder opake Wärmedämmung, als mechanisch tragende Wärmedämmung, Katalysatorträger, Filter, Adsorber, nicht brennbares oder nicht entflammbares, transparentes oder transluzentes oder opakes Leichtbauelement, Dielektrikum für elektronische Bauteile, als kontrolliertes oder schnelles Drug-Release-System, als Schicht zur Nutzung von Thermodiffusionsprozessen, als Gussform, als Träger für Sensormoleküle in der Sensorik, zur Schalldämpfung, zur Feuchteregulierung oder als Matrixmaterial für Komposite.

**Claims**

1. Porous $SiO_2$ xerogel, **characterised in that** it exhibits pores larger than 50 nm but smaller than 1000 nm, in particular smaller than 500 nm, in particular smaller than 300 nm, in particular smaller than 100 nm, a density less than 400 kg/m$^3$, in particular less than 290 kg/m$^3$, in particular less than 200 kg/m$^3$, the carbon content is less than 10%, in particular less than 5%, and the thermal conductivity at 800°C lies beneath 0.060 W/m*K, at 400°C beneath 0.040 W/m*K, and at 200°C beneath 0.030 W/m*K.

2. $SiO_2$ xerogel according to claim 1, **characterised in that** it exhibits a modulus of elasticity of at least 5 MPa.

3. $SiO_2$ xerogel according to one of claims 1 or 2, **characterised in that** it has long-term thermal stability at temperatures of up to 560°C (in an oxygenated atmosphere).

4. $SiO_2$ xerogel according to one of claims 1, 2 or 3, **characterised in that** it is a monolithic moulded body, a granulate or a powder.

5. $SiO_2$ xerogel according to one of claims 1, 2, 3 or 4, **characterised in that** the fibre content is less than 5% by weight.

6. Use of a $SiO_2$ xerogel according to one of claims 1 to 5 as a noncombustible or nonflammable, transparent or translucent or opaque thermal insulation, as a thermal insulation offering mechanical support, catalyst support, filter, adsorber, noncombustible or nonflammable, transparent or translucent or opaque lightweight construction element, dielectric for electronic components, as a controlled or rapid drug release system, as a coating allowing utilization of thermodiffusion processes, as a casting mould, as a support for sensor molecules in sensor technology, for sound damping, for humidity control or as a matrix material for composites.

posites.

## Revendications

1. Xérogel poreux de $SiO_2$, **caractérisé en ce qu'**il présente des pores supérieurs à 50 nm, mais inférieurs à 1000 nm, en particulier inférieurs à 500 nm, en particulier inférieurs à 300 nm, en particulier inférieurs à 100 nm, une densité inférieure à 400 kg/m$^3$, en particulier inférieure à 290 kg/m$^3$, en particulier inférieure à 200 kg/m$^3$, la proportion de carbone est inférieure à 10%, en particulier inférieure à 5% et la conductibilité thermique à 800°C est inférieure à 0,060 W/m*K, à 400°C elle est inférieure à 0,040 W/m*K, à 200°C elle est inférieure à 0,030 W/m*K.

2. Xérogel de $SiO_2$ selon la revendication 1, **caractérisé en ce qu'**il présente un module d'élasticité d'au moins 5 MPa.

3. Xérogel de $SiO_2$ selon l'une quelconque des revendications 1 ou 2, **caractérisé en ce qu'**il est thermiquement stable à long terme à des températures jusqu'à 560°C (dans une atmosphère contenant de l'oxygène).

4. Xérogel de $SiO_2$ selon l'une quelconque des revendications 1, 2 ou 3, **caractérisé en ce qu'**il s'agit d'un corps moulé monolithique, d'un granulat ou d'une poudre.

5. Xérogel de $SiO_2$ selon l'une quelconque des revendications 1, 2, 3 ou 4, **caractérisé en ce que** la proportion de fibres est inférieure à 5% en poids.

6. Utilisation d'un xérogel de $SiO_2$ selon l'une quelconque des revendications 1 à 5 comme isolation thermique non combustible ou non inflammable, transparente ou translucide ou opaque, comme isolation thermique formant un support mécanique, comme support catalytique, comme filtre, comme adsorbant, comme module léger non combustible ou non inflammable, transparent ou translucide ou opaque, comme diélectrique pour des modules électroniques, comme système de libération régulée ou rapide de médicaments, comme couche pour l'exploitation de processus de diffusion thermique, comme forme pour pièce coulée, comme support pour des molécules de capteur dans la technologie des capteurs, pour l'insonorisation, pour la régulation de l'humidité ou comme matériau de matrice pour des com-

EP 2 501 652 B1

Abbildung 1

Abbildung 2

Abbildung 3

Abbildung 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005068361 A
- EP 0690023 A2
- WO 001998005591 A1
- WO 001996022942 A1
- DE 19721600 A1
- DE 3346180 C2

**In der Beschreibung aufgeführte Nicht-Patentliteratur**

- **EINARSRUD, M.A. ; E. NILSEN ; A. RIGACCI ; G.M. PAJONK ; S. BUATHIER ; D. VALETTE ; M. DURANT ; B. CHEVALIER ; P. NITZ ; F. EHR-BURGER-DOLLE.** Strengthening of silica gels and aerogels by washing and aging processes. *Journal of Non-Crystalline Solids, 2001,* 2001, vol. 285, 1-7
- **LARSEN GUSTAVO et al.** Amine dendrimers as templates for amorphous silicas. *Journal of Physical Chemistry. B. Materials, Surfaces, Interfaces and Biophysical,* Januar 2000, vol. 104 (20), 4840-4843
- **M.A. EINARSRUD ; D. HEAREID ; V. WITTWER.** Some thermal and optical properties of a new transparent silica xerogel material with low density. *Solar Energy Materials and Solar Cells,* 1993, vol. 31, 341-347
- **TILLOTSON, T. M. ; HRUBESH, L. W. ; SIMPSON, R. L. ; LEE, R. S. ; SWANSIGER, R. W. ; SIMPSON, L. R.** Sol-gel processing of energetic materials. *Journal of Non-Crystalline Solids,* 1998, vol. 225 (1), 358-363